# EUROPEAN PATENT APPLICATION

(11) **EP 2 390 548 A1**
(43) Date of publication of application: **30.11.2011**
(21) Application number: 10164019.1
(22) Date of filing: 27.05.2010
(51) Int. Cl.: F16M 13/00

(54) **Electonic device holder**

(71) Applicant: Jow Tong Technology Co., Ltd., Yung Kang City, Tainan Hsien (TW)
(72) Inventor: Lin, Chung-Hung, Syuejia Township, Tainan County Taipai (TW)
(74) Representative: Jeannet, Olivier

(57) **Abstract**

An electronic device holder is revealed. By the electronic device holder, an electronic device is supported in a preset position so that users can operate the electronic device conveniently. The electronic device holder consists of holding units (1) on two sides thereof and a connection member (2) connecting the two holding units (1). By the stopping and clipping of the two holding units (1), the electronic device is held and supported firmly in a preset state.

## Description

### BACKGROUND OF THE INVENTION

### 1. Fields of the invention

The present invention relates to an electronic device holder, especially to an electronic device holder that secures and supports an electronic device in a preset position for convenient operation.

### 2. Descriptions of Related Art

Along with progress of modern technology, various kinds of electronic device have been developed and improved. For example, sparkling iPod®" in recent years or the hottest product available now- Tablet PC. The most popular one is Apple iPad^{®}, about the size of a book. Besides displayed vertically, the iPad^{®} screen will flip horizontally as soon as users rotate it 90 degrees with an internal accelerometer, just like iPhone^{®}. And it's good for browsing the internet, checking and sending e-mails, listening to music, watching videos etc.

There is no need to hold the electronic device such as iPad^{®} on the hand all the time, especially viewing videos or surfing internet for a long time. When the electronic device is set on a desk, the angle and the angle and position of the screen are unable to be adjusted. This cause trouble and inconvenience in use.

### SUMMARY OF THE INVENTION

Therefore it is a primary object of the present invention to provide an electronic device holder that supports and holds an electronic device tightly so that users can operate the electronic device conveniently.

In order to achieve above objects, an electronic device holder mainly consists of a holding unit on each of two sides thereof and a connection member connected the two holding units. By the stopping and clipping of the two holding units, the electronic device is set in a preset position firmly and stably.

Moreover, each of the two holding units is disposed with a securing step. When the electronic device is laid on the two holding unit, it is secured by the securing steps of the two holding units.

A grip part for users to hold extends out of the outer side of each holding unit so as to provide convenient operation of the electronic device.

Each of the two holding units is disposed with an insertion slot. The standing electronic device is supported firmly by an edge thereof being mounted into the insertion slot and users can access the content displayed by the electronic device conveniently.

Furthermore, the connection member connecting the holding units on two sides includes at least two rod parts, each of which has one end sleeved with each other. A length adjustment unit is mounted between the two rod parts for changing the length that the two rod part extends outward and further modifying the distance between the two holding units.

In addition, a toggle unit is arranged between the holding units on two sides and the connection member so as to adjust the angle between the holding unit and the connection member. Thus the electronic device holder is folded and received.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a perspective view of an embodiment of an electronic device holder according to the present invention;
Fig. 2 is an explosive view of a connection member and a length adjustment unit of an embodiment according to the present invention;
Fig. 3 is a top view of a connection member and a length adjustment unit of an embodiment according to the present invention;
Fig. 4 is a partial enlarged view of the embodiment in Fig. 3;
Fig. 5 is a top view of a connection member and a length adjustment unit of an embodiment while adjusting a distance according to the present invention;
Fig. 6 is a partial enlarged view of the embodiment in Fig. 5;
Fig. 7 is a schematic drawing showing a top view of an electronic device holder laid horizontally according to the present invention;
Fig. 8 is a schematic drawing showing a top view of an electronic device holder laid vertically according to the present invention;
Fig. 9 is a schematic drawing showing an electronic device holder standing horizontally according to the present invention;
Fig. 10 is a schematic drawing showing an electronic device holder standing vertically according to the present invention;
Fig. 11 is an explosive view of a toggle unit of an embodiment according to the present invention;
Fig. 12 is an assembled cross sectional view of a toggle unit of an embodiment according to the present invention;
Fig. 13 is a schematic drawing showing a toggle unit when the pressing member is pressed according to the present invention;
Fig. 14 is a schematic drawing showing a folded embodiment of an electronic device holder according to the present invention.

### DETAILED DESCRIPTION OF THE PREFERRED EMBODIMENT

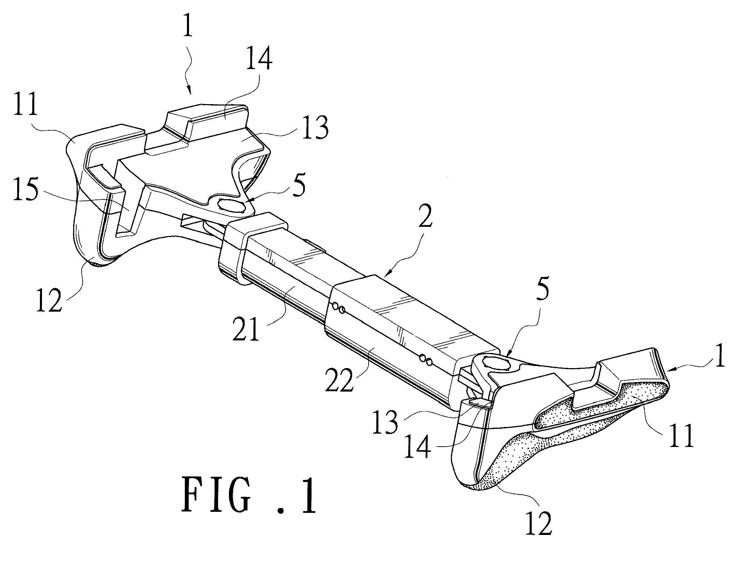

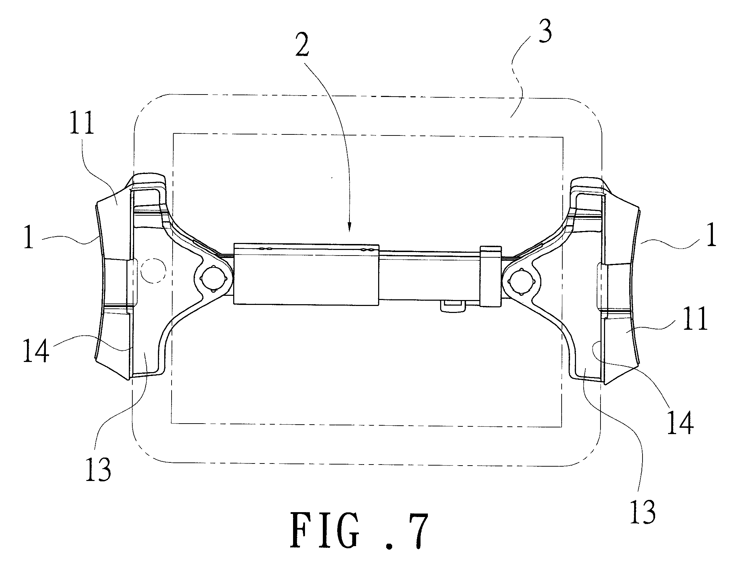

Refer to Fig. 1, an electronic device holder of the present invention mainly consists of two holding units 1 respectively on each of two sides thereof and a connection member 2 connected the two holding units 1. By the stopping and holding of the two holding units 1, an electronic device 3 such as iPad^{®} shown from Fig. 7 to Fig. 10 is secured and fixed firmly in a preset position.

A grip part 11 for users to grasp is arranged projectingly on an outer side of each holding unit 1 so as to provide convenient operation of the electronic device 3.

The electronic device holder further includes a support part 12 disposed projecting from a rear end on a bottom of the two holding units 1 so as to make the electronic device holder slant and have a higher rear side and a lower front side. After the electronic device 3 being fit in the electronic device holder, there is a fitting angle that makes users operate the electronic device 3 easily.

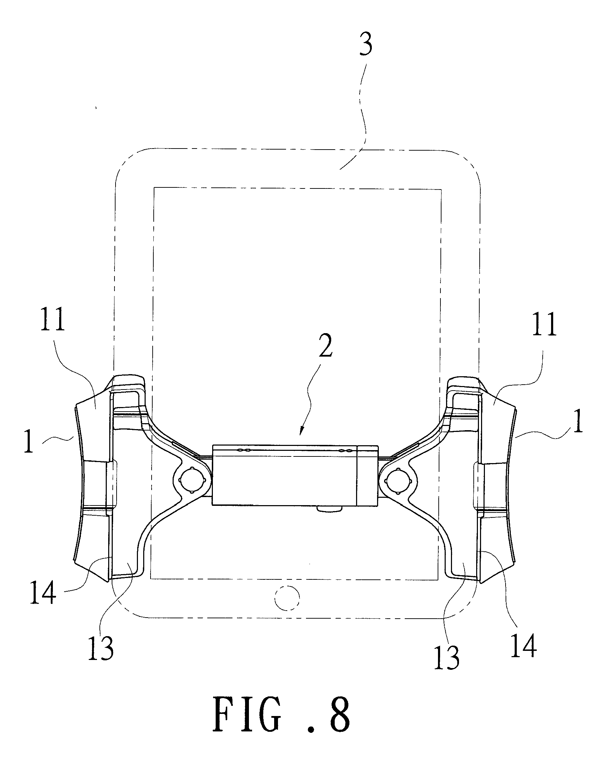

Refer to Fig. 7 and Fig. 8, in an embodiment of the electronic device holder, a depressed area 13 is disposed on each of the two holding units 1. There is a height difference between the depressed area 13 and a top surface of the grip part 11 of the holding unit 1 so that a securing step 14 is formed. Thereby the electronic device 3 is laid between the depressed areas 13 of the two holding units 1 and the securing step 14 of the two holding units 1 attaches closely to each of two sides of the electronic device 3 so as to secure the electronic device 3 between the two holding units 1. Thus the electronic device 3 is used conveniently by users.

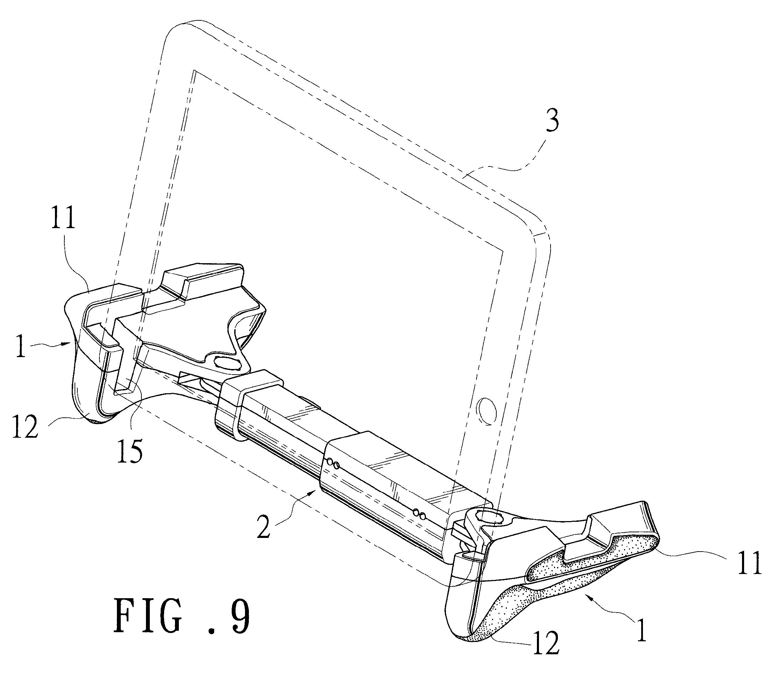

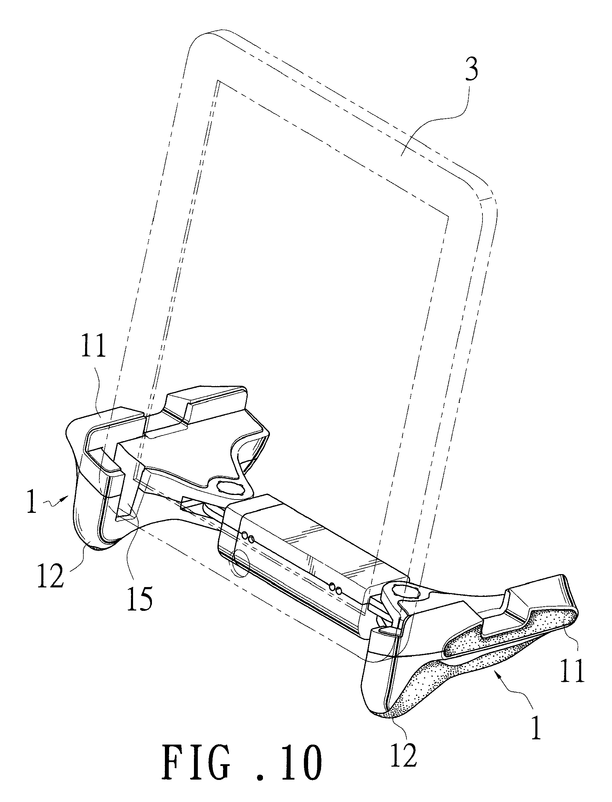

Refer to Fig. 9 and Fig. 10, a further embodiment of the present invention is disclosed. Each of the two holding units 2 is arranged with an insertion slot 15. The edge of the electronic device 3 is mounted into the insertion slot 15 so that the electronic device 3 standing on the electronic device holder can be held tightly by the two holding units 2 and users can access the content displayed by the electronic device 3 comfortably.

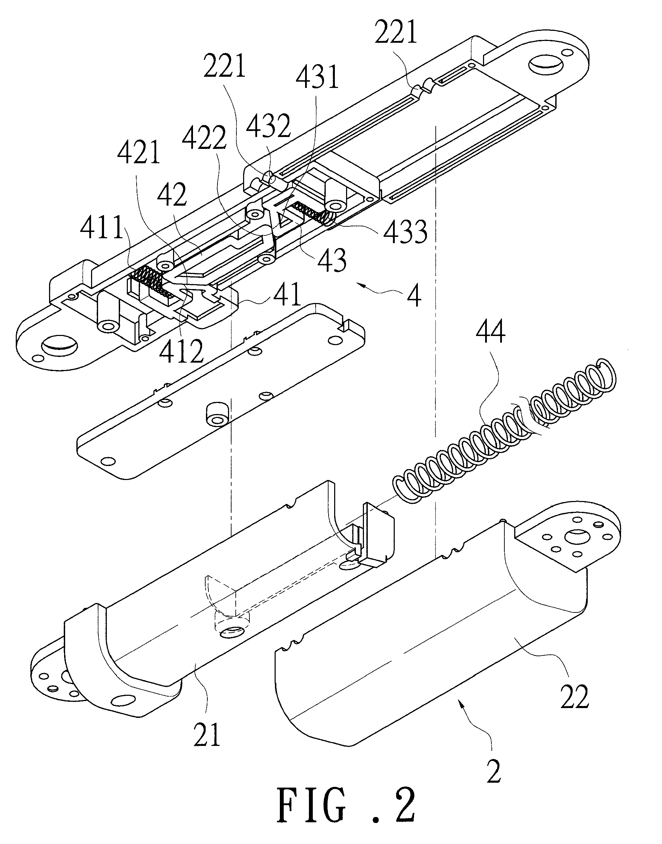

In the above two embodiments, back to Fig. 1 and Fig. 2, the connection member 2 for connecting the holding units 1 on two sides includes a length adjustment unit 4 that changes the distance between the holding units 1 on two sides. No matter the size of the electronic device 3 is large or small, or the electronic device 3 is set vertically or horizontally, the holding units 1 on two sides of the device can hold or support the electronic device 3 firmly through the adjustment of the length adjustment unit 4, as shown from Fig. 7 to Fig. 10.

The connection member 2 for connecting the holding units 1 on two sides of the device in the above two embodiments further includes at least a first rod part 21 and a second rod part 22, each of which has one end sleeved with each other. The length adjustment unit 4 is mounted in a sleeved part which the first rod part 21 and the second rod part 22 sleeved with each other so as to change the distance the first rod part 21 sleeved with the second rod part 22 and further modifying the distance between the two holding units 1.

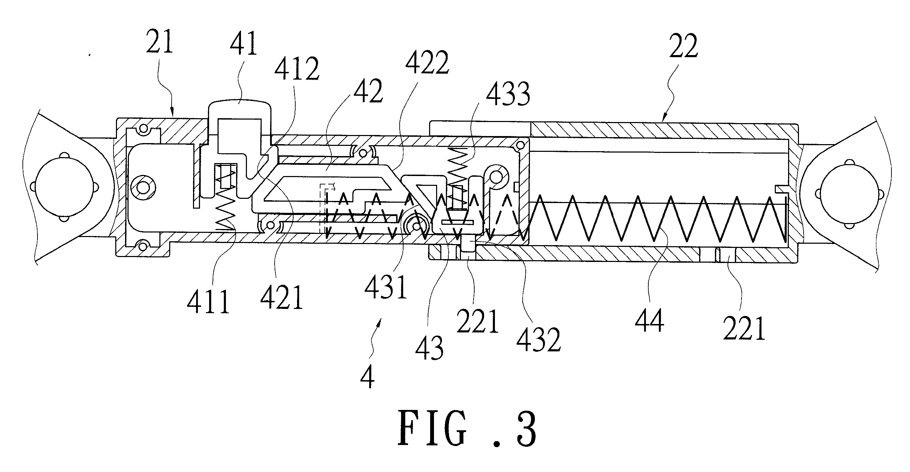

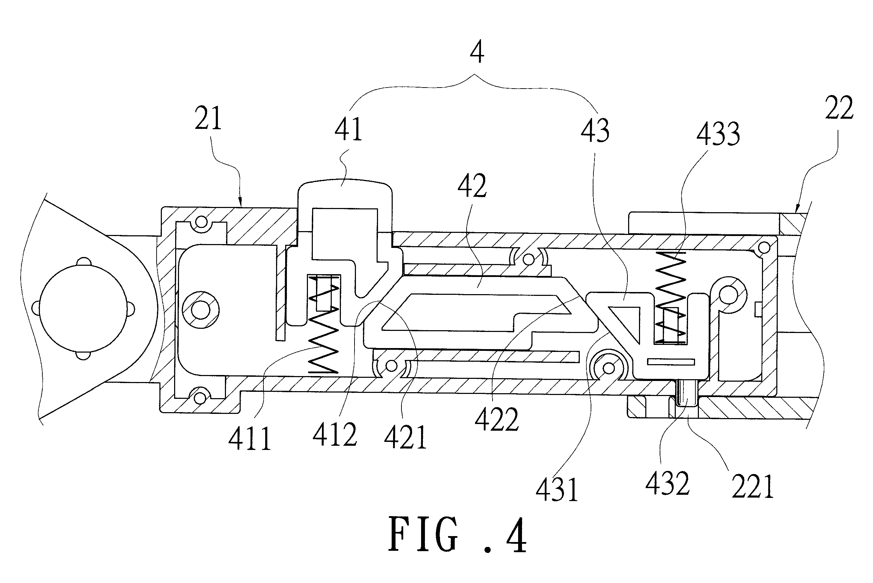

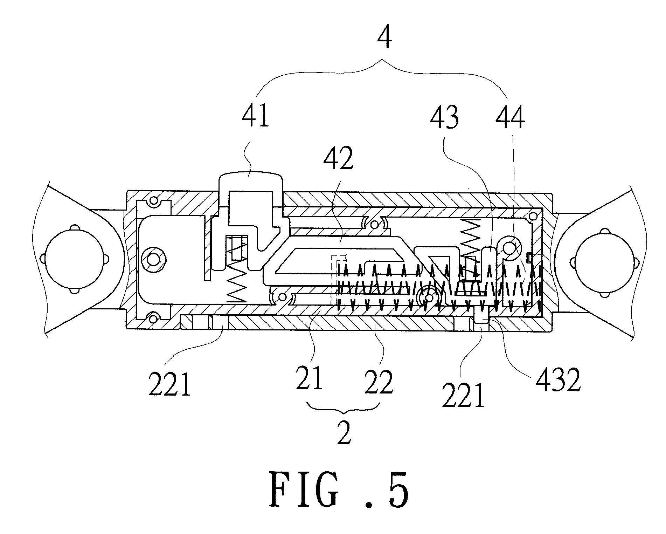

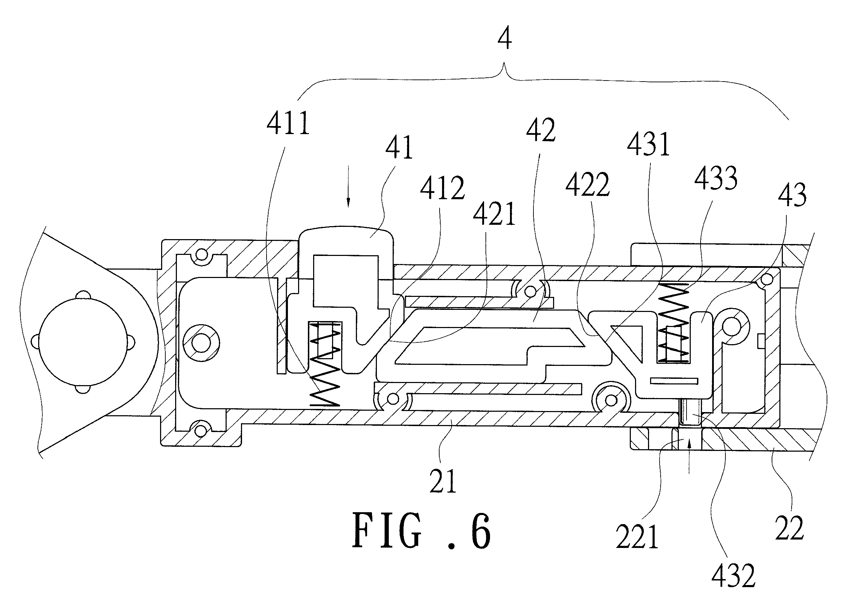

Refer from Fig. 2 to Fig. 6, the length adjustment unit 4 consists of a pressing part 41 that extends out of a tube wall of the first rod part 21 and has elasticity to be pressed, an auxiliary drive part 42 being pushed by the pressing part 41, and a location part 43 moved along with the auxiliary drive part 42 to be mounted into a tube wall of the second rod part 22. The pressing part 41 is disposed with a first elastic element 411 between the tube wall of the first rod part and the pressing part 41, along the pressed direction. The pressing part 41 also has a first slanting surface 412 on one side thereof, beside the auxiliary drive part 42. The auxiliary drive part 42 consists of a first leaning surface 421 arranged on one side, facing and corresponding to the first slanting surface 412 of the pressing part 41 and a second slanting surface 422 disposed on the other side thereof. The location part 43 is set with a second leaning surface 431 corresponding to the second slanting surface 422 of the auxiliary drive part 42, and a tenon 432 that extends out of the tube wall of the first rod part 21 to be locked with one of a plurality of locating holes 221 on the tube wall of the second rod part 22. Moreover, a second elastic element 433 is arranged one side of the location part 43, opposite to the tenon 432, located between the tube wall of the first rod part 21 and the location part 43.

Thereby when the pressing part 41 is pressed and moved toward the first elastic element 411 to compress the first elastic element 411, the pressing part 41 pushes against the first leaning surface 421 of the auxiliary drive part 42 by the first slanting surface 412 because the first slanting surface 412 and the first leaning surface 421 are attached closely and moved together. Thus the auxiliary drive part 42 moves toward the side with the second slanting surface 422 thereof. The second leaning surface 431 of the location part 43 is corresponding to the second slanting surface 422 so that the second slanting surface 422 of the auxiliary drive part 42 presses against the location part 43 when the auxiliary drive part 42 moves toward the side with second slanting surface 422 thereof. Thus the tenon 432 of the location part 43 is released from the locating hole 221 of the second rod part 22 and the second elastic element 433 is compressed. Now the distance sleeved between the first rod part 21 and the second rod part 22 can be adjusted to a preset length. Then the pressing part 41 is released so that the pressing part 41 turns back to the original position (the position without being pressed) and the tenon 432 of the location part 43 is again locked into another locating hole 221 of the second rod part 22 due to the elastic recovery force of the first elastic element 411 and the elastic recovery force of the second elastic element 433 respectively. At the same time, the auxiliary drive part 42 is also moved and turning back to the original position. Thus the adjustment of the distance between the two holding units 1 is achieved.

In the above two embodiments, an elastic part 44 is arranged between the first rod part 21 and the second rod part 22. When the elastic part 44 is not compressed, the distance between the first and the second rod parts 21, 22 is the maximum after the first and the second rod parts 21, 22 being extended. When the elastic part 44 is compressed and the pressing part 41 is pressed for releasing the tenon 432 of the location part 43 from the locating hole 221 of the second rod part 22, the first and the second rod parts 21, 22 move and project outward by the elastic recovery force of the elastic part 44.

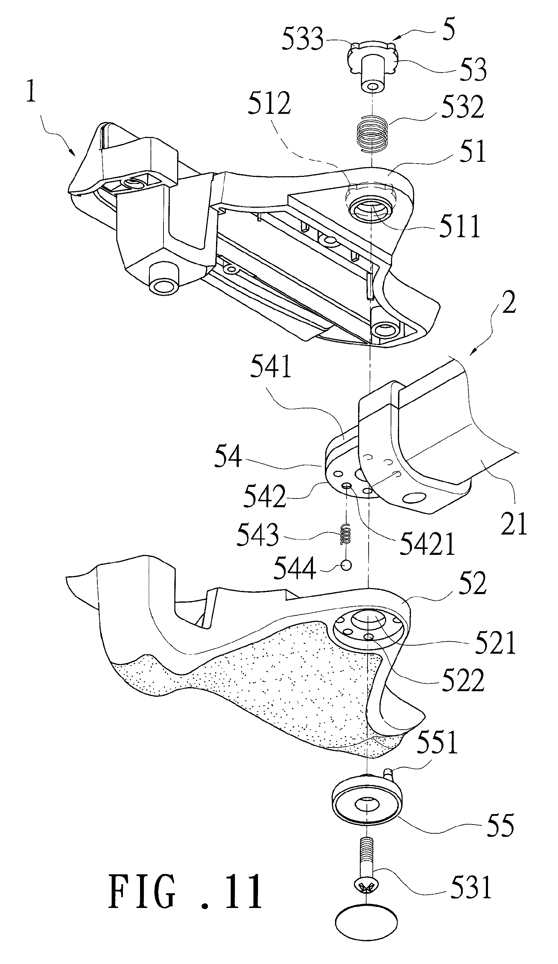

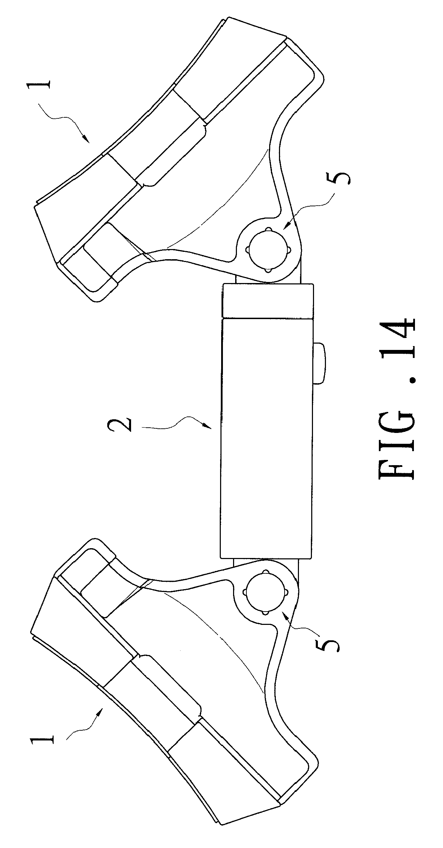

Refer to Fig. 1 and Fig. 11, a toggle unit 5 is disposed between the holding unit 1 on each of two sides and the first rod part 21 of the connection member 2 as well as between the holding unit 1 on each of two sides and the second rod part 22 of the connection member 2. By means of the toggle unit 5, the two holding units 1 can be folded and received inward to be in a folded state while not in use, as shown in Fig. 14.

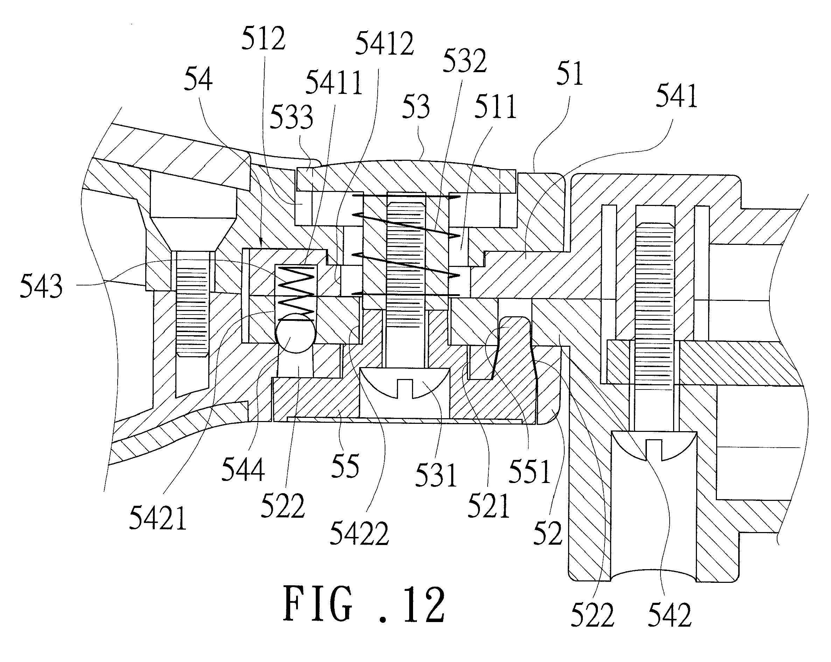

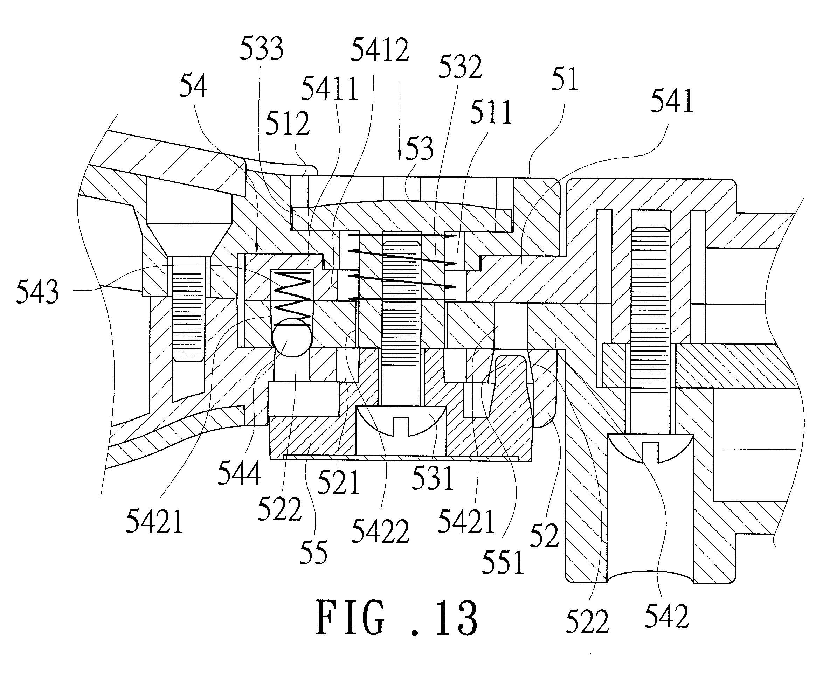

Refer to Fig. 12 and Fig. 13, the toggle unit 6 includes an upper pivotal part 51, a lower pivotal part 52, a pressing member 53, a middle pivotal part 54 and a location member 55. The upper pivotal part 51 is disposed correspondingly to the lower pivotal part 52. The upper pivotal part 51 and the lower pivotal part 52 have a central hole 511, 521 respectively. A groove 512 is arranged around the central hole 511 of the upper pivotal part 51 and the lower pivotal part 52 is disposed with a plurality of insertion holes 522. The middle pivotal part 54 is set between the upper pivotal part 51 and the lower pivotal part 52 and is having two corresponding ring bodies 541, 542. The upper ring body 541 is disposed with a concave hole 5411 and the lower ring body 542 is mounted with a plurality of through holes 5421. One of the through holes 5421 is corresponding to the concave hole 5411 and a third elastic element 543 elastically pushing against a location part 544 is mounted in this concave hole 5411 and the corresponding through hole 5421. The front end of the location part 544 is extending out of the through hole 5421 a bit and is mounted in an end of one of the insertion holes 522 of the lower pivotal part 52. The two corresponding ring bodies 541, 542 respectively have a central hole 5412, 5422. The location member 55 includes an insertion pin 551 that is mounted in one of the insertion holes 522 of the lower pivotal part 52 and in one of the through holes 5421 of the lower ring body 542 without the location part 544 correspondingly. The pressing member 53 and the location member 55 respectively penetrate into the central hole 511 of the upper pivotal part 51 and the central hole 521 of the lower pivotal part 52, through the central holes 5412, 5422 of the two corresponding ring bodies 541, 542 of the middle pivotal part 54. A fastening part 531 inserts through the location member 55 to be fastened with the pressing member 53. A fourth elastic element 532 is set between the pressing member 53 and the location member 55 while the pressing part 53 is arranged with a convex part 533 corresponding to the groove 512 of the upper pivotal part 51 so that the pressing member 53 is radially located in the upper pivotal part 51 and is moved with radial rotation of the upper pivotal part 51. Thereby the toggle unit 5 is formed.

Furthermore, the upper pivotal part 51, the lower pivotal part 52, and the middle pivotal part 54 of the toggle unit 5 can be extended from the first rod part 21, the second rod part 22 or the holding unit 1.

Refer to Fig. 13 and Fig. 14, while folding the holding unit 1 on two sides thereof, press the pressing member 53 so that the pressing member 53 pushes against the location member 55 and the insertion pin 55 1 of the location member 55 is released from the corresponding through hole 5421 of the lower ring body 542. Then the holding unit 1 can be rotated, folded and packed into a smaller size. Moreover, while rotating the holding unit 1, a multistage location effect is achieved through the location part 544 being pushed by the third elastic element 543 to be mounted in one of the insertion holes 522 of the lower pivotal part 52. After releasing the pressing member 53, the pressing member 53 is pulled back to the original position by the recovery force of the compressed fourth elastic element 532. Moving along with the pressing member 53, the e location member 55 also turns back to its original position and the insertion pin 551 of the location member 55 is again mounted into the corresponding through hole 5421 of the lower ring body 542 so as to fix the folded holding unit 1.

## Claims

1. An electronic device holder **characterized in that** it comprises a holding unit 1 disposed on each of two sides thereof, and a connection member 2 that connects the two holding units 1; a depressed area 13 is arranged at each of the two holding units 1 so as to form a securing step 14 due to a height difference between the depressed area 13 and a top surface of the holding unit 1; the holding unit 1 further includes an insertion slot 15 for mounting an edge of an electronic device 3; the electronic device 3 is held tightly and stably by stopping and clipping of the two holding units 1.

2. The device as claimed in claim 1, **characterized in that** the connection member 2 that connects the two holding units 1 on two sides includes a length adjustment unit 4 for changing distance between the two holding units 1.

3. The device as claimed in claim 2, **characterized in that** the connection member 2 includes at least a first rod part 21 and a second rod part 22, each of which has one end sleeved with each other while the length adjustment unit 4 is disposed between the first rod part 21 and the second rod part 22.

4. The device as claimed in claim 3, **characterized in that** the length adjustment unit 4 includes a pressing part 41 that extends out of a tube wall of the first rod part 21 and has elasticity to be pressed, an auxiliary drive part 42 being pushed by the pressing part 41, and a location part 43 moved along with the auxiliary drive part 42 to be mounted into a tube wall of the second rod part 22, and an elastic part 44 arranged between the first rod part 21 and the second rod part 22; the pressing part 41 having a first elastic element 411 disposed between the tube wall of the first rod part 21 and the pressing part 41 and along the pressed direction, a first slanting surface 412 on one side thereof and facing the auxiliary drive part 42; the auxiliary drive part 42 includes a first leaning surface 421 arranged on one side and corresponding to the first slanting surface 412 of the pressing part 41 and a second slanting surface 422 disposed on the other side thereof; the location part 43 includes a second leaning surface 431 corresponding to the second slanting surface 422 of the auxiliary drive part 42, a tenon 432 that extends out of the tube wall of the first rod part 21 to be locked with one of a plurality of locating holes 221 on the tube wall of the second rod part 22, and a second elastic element 433 arranged at one side of the location part 43 opposite to the tenon 432 and located between the tube wall of the first rod part 21 and the location part 43.

5. The device as claimed in claim 4, **characterized in that** when the elastic part 44 arranged between the first rod part 21 and the second rod part 22 is not compressed, distance between the first rod part 21 and the second rod part 22 is the maximum after the first rod part 21 and the second rod part 22 being extended.

6. The device as claimed in claim 2, **characterized in that** a toggle unit 5 is arranged between each of the holding units 1 and the connection member 2.

7. The device as claimed in claim 6, **characterized in that** the toggle unit 5 includes an upper pivotal part 51, a lower pivotal part 52, a pressing member 53, a middle pivotal part 54 and a location member 55; the upper pivotal part 51 and the lower pivotal part 52 are disposed corresponding to each other and respectively having a central hole 511, 521; a groove 512 is arranged around the central hole 511 of the upper pivotal part 51 while the lower pivotal part 52 is disposed with a plurality of insertion holes 522; the middle pivotal part 54 is set between the upper pivotal part 51 and the lower pivotal part 52, and having two ring bodies 541, 542 arranged vertically and correspondingly in which the ring body 541 above is disposed with a concave hole 5411 while the ring body 542 under is mounted with a plurality of through holes 5421; one of the through holes 5421 is corresponding to the concave hole 5411 and a third elastic element 543 elastically pushing against a location part 544 is mounted in the concave hole 5411 and the corresponding through hole 5421; a front end of the location part 544 is extending out of the through hole 5421 a bit and is mounted in an end of one of the insertion holes 522 of the lower pivotal part 52; the two ring bodies 541, 542 respectively having a central hole 5412, 5422; the location member 55 includes an insertion pin 51 that is mounted in one of the insertion holes 522 of the lower pivotal part 52 and in one of the through holes 5421 of the ring body 542 under without the location part 544; the pressing member 53 and the location member 55 respectively penetrate into the central hole 511 of the upper pivotal part 51 and the central hole 521 of the lower pivotal part 52 correspondingly, through the central holes 5412, 5422 of the two ring bodies 541, 542 of the middle pivotal part 54; a fastening part 531 is penetrating through the location member 55 to be fastened with the pressing member 53 and a fourth elastic element 532 is set between the pressing member 53 and the location member 55.

8. The device as claimed in claim 7, **characterized in that** a convex part 533 corresponding to the groove 512 of the upper pivotal part 51 is disposed around the pressing part 53 so that the pressing member 53 is radially located in the upper pivotal part 51 and is moved with radial rotation of the upper pivotal part 51.

9. The device as claimed in claim 8, **characterized in that** the upper pivotal part 51, the lower pivotal part 52, and the middle pivotal part 54 of the toggle unit 5 are extended from the first rod part 21, the second rod part 22 or the holding unit 1 adjacent to and connected thereof.

10. The device as claimed in claim 1, **characterized in that** a grip part 11 is arranged projectingly on an outer side of each of the two holding units 1 and a support part 12 is disposed projecting from a rear end on a bottom of each of the two holding units 1 so as to make the electronic device holder slant and have a higher rear side and a lower front side.
